(19) Europäisches Patentamt
European Patent Office
Office européen des brevets

(11) Veröffentlichungsnummer: **0 151 446**
**B1**

# (12) EUROPÄISCHE PATENTSCHRIFT

(45) Veröffentlichungstag der Patentschrift: **19.09.90**

(51) Int. Cl.⁵: **C 09 K 19/42,** C 09 K 19/34, G 02 F 1/13

(21) Anmeldenummer: **85100810.2**

(22) Anmeldetag: **26.01.85**

## (54) Flüssigkristalline Phase.

(30) Priorität: **07.02.84 DE 3404117**

(43) Veröffentlichungstag der Anmeldung:
**14.08.85 Patentblatt 85/33**

(45) Bekanntmachung des Hinweises auf die Patenterteilung:
**19.09.90 Patentblatt 90/38**

(84) Benannte Vertragsstaaten:
**CH DE FR GB LI**

(56) Entgegenhaltungen:
**DE-A-2 815 860**
**DE-A-2 846 409**

(73) Patentinhaber: **MERCK PATENT GESELLSCHAFT MIT BESCHRÄNKTER HAFTUNG**
**Frankfurter Strasse 250 Postfach 4119**
**D-6100 Darmstadt (DE)**

(72) Erfinder: **Scheuble, Bernhard, Dr.**
**Am Grenzweg 18**
**D-6146 Alsbach (DE)**
Erfinder: **Weber, Georg**
**Wilhelm-Leuschner-Strasse 38**
**D-6106 Erzhausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft eine flüssigkristalline Phase bestehend aus 3 bis 25 Komponenten, dadurch gekennzeichnet, daß sie 3 bis 15 Pyrimidinverbindungen der Formel I

$$R^1—A^1—Z^1—A^2—R^2 \qquad \text{I}$$

enthält, worin

$R^1$ und $R^2$ jeweilf unabhängig voneinandergeradkettiges Alkyl oder Alkoxy mit bis zu 12 C-Atomen,

$A^1$ —A—, —$A^4$—A— oder —A—$Z^3$—$A^4$—,

A Pyrimidin-2,5-diyl

$A^2$ und $A^4$ jeweils unsubstituiertes oder durch ein oder zwei F- und/oder Cl-Atome und/oder $CH_3$-Gruppen und/oder CN-Gruppen substituiertes 1,4-Phenylen, worin auch eine oder zwei CH-Gruppen durch N-Atome ersetzt sein können, 1,4-Cyclohexylen, worin auch eine oder zwei nicht benachbarte $CH_2$-Gruppen durch O-Atome ersetzt sein können, 1,3-Dithian-2,5-diyl, 1,4-Bicyclo(2,2,2)-octylen, Dekahydronaphthalin-2,6-diyl oder 1,2,3,4-Tetrahydronaphthalin-2,6-diyl, und

$Z^1$ und $Z^3$ jeweils —CO—O—, —O—CO—, —$CH_2CH_2$—, —$OCH_2$—, —$CH_2O$— oder eine Einfachbindung bedeutet,

mit einem Gesamtanteil von 20 bis 94%, wobei zwei Pyrmidinverbindungen der Formel I vier verschiedene Flügelgruppen $R^1$ und $R^2$ besitzen, und andere Bestandteile der Formel II enthält,

$$R'—L—G—E—R'' \qquad \text{II}$$

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten 1,3-Dioxanringen, 2,6-disubstituiertem Naphthalin, Di- und Tetrahydronapthalin, Chinazolin und Tetrahydrochinazolin gebildeten Gruppe,

| | | |
|---|---|---|
| G | —CH=CH— | —N(O)=N— |
| | —C≡C— | —CH=N(O)— |
| | —CH=N— | —$CH_2$—$CH_2$— |
| | | —$CH_2$—O— |
| | | —$CH_2$—S— |

oder eine C-C-Einfachbindung, und R' und R'' Alkyl, Alkoxy, Alkanoyloxy oder Alkoxycarbonyloxy mit bis zu 8 Kohlenstoffatomen, oder einer dieser Reste auch CN, NC, $NO_2$, $CF_3$, F, Cl oder Br bedeuten.

Diese Phase hat ein kleines Verhältnis der elastischen Konstanten für die Biegung und die Spreizung $K_3/K_1$ und eine stabile Mesophase bei tiefen Temperaturen.

Für Flüssigkristall-Anzeigeelemente werden in zunehmendem Maße die Eigenschaften nematischer oder nematischcholesterischer flüssigkristalliner Materialien ausgenutzt, ihre optischen Eigenschaften wie Lichtabsorption, Lichtstreuung, Doppelbrechung, Reflexionsvermögen oder Farbe unter dem Einfluß elektrischer Felder signifikant zu verändern. Die Funktion derartiger Anzeigeelemente beruht dabei beispielsweise auf den Phänomenen der dynamischen Streuung, der Deformation aufgerichteter Phasen, dem Schadt-Helfrich-Effekt in der verdrillten Zelle oder dem cholesterisch-nametischen Phasenübergang.

Flüssigkristallanzeigeelement mit hohen Multiplexverhältnissen zur Verwirklichung großer Informationsdichten setzen Flüssigkristalle mit kleinen $K_3/K_1$-Verhältnissen voraus (B.S. Scheuble und G. Baur, 13. Freiburger Arbeitstagung Flüssigkristalle (1983)). Frühere Untersuchungen ergaben teilweise sehr kleine Verhältnisse $K_3/K_1$ in Mischungen aus terminal polaren und terminal unpolaren Flüssigkristallen (EP—OS 56 501) und in Mischungen mit Phenylpyrimidinen.

Die bekannten Flüssigkristallmischungen genügen jedoch den an sie gestellten Anforderungen nur teilweise. Mit den bisherigen Flüssigkristallphasen war es nicht möglich, gleichzeitig kleine $K_3/K_1$-Verhältnisse und eine bei tiefen Temperaturen stabile Mesophase zu verwirklichen. Es sind zwar bereits flüssigkristalline Phasen bekannt, die Phenylpyrimidine enthalten, zum Beispiel aus DE—OS 30 23 989; keine dieser Phasen war jedoch bei tiefen Temperaturen stabil. Obwohl der Betriebstemperaturbereich von Flüssigkristallanzeigeelementen mit hohen Multiplexverhältnissen verhältnismäßig eingeschränkt ist (0—60°), darf die Flüssigkristallphase bei einer Lagerung oder beim Transport der Anzeigeelemente bei tiefen Temperaturen (z.B. −15°— −30°) nicht auskristallisieren, da sonst die Orientierung der Flüssigkristallphase irreversibel zerstört wird.

Der Erfindung lag die Aufgabe zugrunde, flüssigkristalline Phasen aufzufinden, die diese Nachteile nicht oder nur in geringem Maße aufweisen.

Es wurde nun gefunden, daß flüssigkristalline Phasen mit kleinem Verhältnis $K_3/K_1$ und stabiler Mesophase bei tiefen Temperaturen erhalten werden, wenn man 3 bis 15 Flüssigkristallverbindungen als Mischungskomponenten verwendet, die als Strukturelement einen Pyrimidinring enthalten, der Formel I entsprechen, und vier verschiedene Flügelgruppen besitzen. Diese Phasen können außerdem in Flüssigkristallanzeigeelementen mit verschiedenartigsten Orientierungsschichten im allgemeinen

problemlos angewendet werden. Weiterhin zeigen diese Phasen bei tiefen Temperaturen überraschend niedrige Viskositätswerte.

Gegenstand der Erfindung ist somit eine flüssigkristalline Phase bestehend aus 3 bis 25 Komponenten, dadurch gekennzeichnet, daß sie 3 bis 15 Pyrimidinverbindungen der Formel I

$$R^1—A^1—Z^1—A^2—R^2 \qquad I$$

enthält, worin

$R^1$ und $R^2$ jeweils unabhängig voneinandergeradkettiges Alkyl oder Alkoxy mit bis zu 12 C-Atomen,

$A^1$ —A—, —$A^4$—A— oder —A—$Z^3$—$A^4$—,

A Pyrimidin-2,5-diyl

$A^2$ und $A^4$ jeweils unsubstituiertes oder durch ein oder zwei F- und/oder Cl-Atome und/oder $CH_3$-Gruppen und/oder CN-Gruppen substituiertes 1,4-Phenylen, worin auch eine oder zwei CH-Gruppen durch N-Atome ersetzt sein können, 1,4-Cyclohexylen, worin auch eine oder zwei nicht benachbarte $CH_2$-Gruppen durch O-Atome ersetzt sein können, 1,3-Dithian-2,4-diyl, 1,4-Bicyclo(2,2,2)-octylen, Dekahydronaphthalin-2,6-diyl oder 1,2,3,4-Tetrahydronaphthalin-2,6-diyl, und

$Z^1$ und $Z^3$ jeweils —CO—O—, —O—CO—, —$CH_2CH_2$—, —$OCH_2$—, —$CH_2O$— oder eine Einfachbindung bedeutet,

mit einem Gesamtanteil von 20 bis 94%, wobei zwei Pyrimidinverbindungen der Formel I vier verschiedene Flügelgruppen $R^1$ und $R^2$ besitzen, und andere Bestandteile der Formel II enthält,

$$R'—L—G—E—R'' \qquad II$$

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten 1,3-Dioxanringen, 2,6-disubstituiertem Naphthalin, Di- und Tetrahydronaphthalin, Chinazolin und Tetrahydrochinazolin gebildeten Gruppe,

| | | |
|---|---|---|
| G | —CH=CH— | —N(O)=N— |
| | —C≡C— | —CH=N(O)— |
| | —CH=N— | —$CH_2$—$CH_2$— |
| | | —$CH_2$—O— |
| | | —$CH_2$—S— |

oder eine C—C-Einfachbindung, und R' und R'' Alkyl Alkoxy, Akanoyloxy oder Alkoxycarbonyloxy mit bis zu 8 Kohlenstoffatomen, oder einer dieser Reste auch CN, NC, $NO_2$, $CF_3$, F, CL oder Br bedeuten. Ferner sind Gegenstand der Erfindung die Verwendung solcher Phasen in Flüssigkristallanzeigeelementen mit hohen Multiplexverhältnissen zur Verbesserung der Stabilität bei tiefen Temperaturen sowie Flüssigkristallanzeigeelemente, insbesondere elektrooptische Anzeigeelemente, die solche Phasen enthalten.

Erfindungsgemäße Phasen sowie die Tatsachen, daß diese Phasen auch bei tiefen Temperaturen stabil sind und/oder mit den verschiedenartigsten Orientierungsschichten im Flüssigkristallanzeigeelement kompatibel sind, sind noch nicht beschrieben worden.

Die erfindungsgemäßen Phasen enthalten 20 bis 94% an Flüssigkristallverbindungen der Formel I mit Pyrmidinring als Strukturelement. Bevorzugt sind erfindungsgemäße Phasen mit 30 bis 94%, insbesondere 33 bis 55% an Flüssigkristallverbindungen der Formel I mit Pyrimidinring als Strukturelement.

Die erfindungsgemäßen Phasen kristallisieren auch bei längerer Lagerung (zum Beispiel 1000 h) bei Temperaturen zwischen −15 und −30° nicht aus; d.h. sie weisen im allgemeinen bis mindestens −15°, vorzugsweise bis −25° und insbesondere bis −30° eine stabile Mesophase auf. Die erfindungsgemäßen Phasen weisen kleine $K_3/K_1$-Verhältnisse auf, in der Regel<0,95, vielfach <0,85. Bevorzugte erfindungsgemäße Phasen weisen ein $K_3/K_1$<0,85, insbesonders <0,75, auf.

Besonders günstige Eigenschaften zeigen solche erfindungsgemäße Phasen, die 6 bis 12 Flüssigkristallverbindungen mit Pyrimidinring enthalten. Weiterhin bevorzugt sind erfindungsgemäße Phasen, die ein eutektisches Gemisch aus 6 bis 12, insbesondere 8 bis 12, Flüssigkristallverbindungen mit Pyrimidinring enthalten.

Flüssigkristallverbindungen besitzen in der Regel eine langgestreckte Molekülform mit einem Rumpfteil aus mindestens zwei direkt oder über Brückenglieder verknüpften aromatischen oder cycloaliphatischen Ringen. Dieser Rumpfteil trägt in der Regel auf beiden Seiten eine Endgruppe, die hier als Flügelgruppe bezeichnet wird.

Die erfindungsgemäßen Phasen enthalten mindestens drei Flüssigkristallverbindungen mit Pyrimidinring mit vier verschiedenen Flügelgruppen. Besonders günstige Eigenschaften zeigen solche erfindungsgemäße Phasen, die m Flüssigkristallverbindungen mit Pyrimidinring enthalten (m=6 bis 12) und mindestens m verschiedene Flügelgruppen enthalten.

Vorzugsweise werden die Flügelgruppen gewählt aus der Gruppe Alkyl und Alkoxy. Diejenigen erfindungsgemäßen Phasen sind bevorzugt, worin sowohl die Alkyl- als auch die Alkoxygruppen möglichst

verschiedenartig sind. Beispielsweise enthält eine bevorzugte erfindungsgemäße Phase verschiedene Flüssigkristallverbindungen mit Pyrimidinring mit insgesamt r Alkylgruppen und s Alkoxygruppen, wobei entweder r verschiedene Alkylgruppen und mindestens zwei, insbesondere mindestens drei, verschiedene Alkoxygruppen oder s verschiedene Alkoxygruppen und mindestens zwei, insbesondere drei, verschiedene Alkylgruppen auftreten.

Als Flüssigkristallverbindungen mit Pyrimidinring können Verbindungen der Formel I verwendet werden,

$$R^1—A^1—Z^1—A^2—R^2 \qquad I$$

worin

$R^1$ und $R^2$ jeweils unabhängig voneinander eine Alkylgruppe mit 1—15 C-Atomen, worin auch eine oder zwei $CH_2$-Gruppen durch O-Atome und/oder —CO—Gruppen und/oder —O—CO-Gruppen und/oder —CO—O-Gruppen ersetzt sein können einer der Rest $R^1$ und $R^2$ auch H, CN, F, Cl, Br oder $R^3—(A^3)_p—Z^2—$,

$A^1$ —A—, —$A^4$—A— oder —A—$Z^3$—$A^4$—,

A Pyrimidin-2,5-diyl

$A^2$, $A^3$ und $A^4$ jeweils unsubstituiertes oder durch ein oder zwei F- und/oder Cl-Atome und/oder $CH_2$-Gruppen und/oder CN-Gruppen substituiertes 1,4-Phenylen, worin auch eine oder zwei CH-Gruppen durch N-Atome ersetzt sein können, 1,4-Cyclohexylen, worin auch eine oder zwei nicht benachbarte $CH_2$-Gruppen durch O-Atome ersetzt sein können, 1,3-Dithian-2,5-diyl, 1,4-Bicyclo(2,2,2)-octylen, Dekahydronaphthalin-2,6-diyl oder 1,2,3,4-Tetrahydronaphthalin-2,6-diyl,

$Z^1$, $Z^2$ und $Z^3$ jeweils —CO—O—, —O—CO—, —$CH_2CH_2$—, —$OCH_2$—, —$CH_2O$— oder eine Einfachbindung,

p 1 oder 2 und

$R^3$ H, F, Cl, Br, CN oder eine Alkylgruppe mit 1—15 C-Atomen, worin auch eine oder zwei $CH_2$-Gruppen durch O-Atome und/oder —CO-Gruppen und/oder —O—CO-Gruppen und/oder —CO—O-Gruppen ersetzt sein können, bedeutet.

Bevorzugte Verbindungen der Formel I sind beschrieben in DE-OS 22 57 588, EP—OS 14 885, EP-OS 84 194, EP-OS 104 011, GB-OS 20 85 877, DD-OS 144 409, BE-OS 846 316, DE-OS 25 47 737, DE-OS 33 15 295, DE-OS 34 01 321, GB-OS 20 84 576, JP-OS 56-164171, JP-OS 56-164169, JP-OS 56-184170, JP-OS 56-113768 und JP-OS 59-098065.

Falls die Flügelgruppen $R^1$ und/oder $R^2$ Alkylreste bedeuten, in denen auch eine ("Alkoxy") $CH_2$-Gruppe durch O-Atome ersetzt sein kann, so können sie geradkettig oder verzweigt sein. Vorzugsweise sind sie geradkettig, haben 2, 3, 4, 5, 6, 7, 8, 9, 10, 11 oder 12 C-Atome und bedeuten demnach bevorzugt Ethyl, Propyl, Butyl, Pentyl, Hexyl, Heptyl, Octyl, Nonyl, Decyl, Undecyl, Dodecyl, Ethoxy, Propoxy, Butoxy, Pentoxy, Hexoxy, Heptoxy, Octoxy, Nonoxy, Decoxy, Undecoxy, Dodecoxy, ferner Methyl, Methoxy.

Die Verbindungen der Formel I sind entweder bekannt oder sie können nach an sich bekannten Methoden hergestellt werden, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannten und geeignet sind. Dabei kann man auch von an sich bekannten, hier nicht näher erwähnten Varianten Gebrauch machen.

Der Fachmann kann durch Routinemethoden entsprechende Synthesemethoden aus dem Stand der Technik entnehmen (z.B. DE—OS 23 44 732, 24 50 088, 24 29 093, 25 02 904, 26 36 684, 27 01 591 und 27 52 975 betreffend Verbindungen mit 1,4-Cyclohexylen- und 1,4-Phenylen-Gruppen; DE-PS 26 41 724 betreffend Verbindungen mit Pyrmidin-2,5-diyl-Gruppen; DE-OS 32 38 350 betreffend Verbindungen mit Pyridazin-2,5-diyl-Gruppen; JP-OS 58-43961 betreffend Verbindungen mit Pyrazin-2,5-diyl-Gruppen; DE-OS 29 44 905 und 32 27 916 betreffend Verbindungen mit 1,3-Dioxan-2,5-diyl-Gruppen; DD 160 061 betreffend Verbindungen mit 1,3-Dithian-2,5-diyl-Gruppen; US 4,261,652 und 4,219,256 betreffend Verbindungen mit 1,4-Bicyclo(2,2,2)-octylen-Gruppen; DE-OS 31 50 312 betreffend Verbindungen mit Dekahydronaphthalin-2,6-diyl-Gruppen; DE-OS 29 49 080 betreffend Verbindungen mit 1,2,3,4-Tetrahydronaphthalin-2,6-diyl-Gruppen; und DE-OS 32 01 721 betreffend Verbindungen mit —$CH_2CH_2$-Brückengliedern.

Die erfindungsgemäßen flüssigkristallinen Phasen bestehen aus 3 bis 25, vorzugsweise 5 bis 15 Komponenten, darunter mindestens zwei Verbindungen mit Pyrimidinring. Die anderen Bestandteile werden vorzugsweise ausgewält aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexancarbonsäurephenyl- oder -cyclohexyl-ester, Phenylcyclohexane, Cyclohexylbiphenyle, 1,4-Bis-cyclohexylbenzole, 4,4'-Bis-cyclohexylbiphenyle, Phenyl- oder Cyclohexylpyrimidine, Phenyl- oder Cyclohexyldioxane, Phenyl- oder Cyclohexyl-1,3-dithiane, 1,2-Diphenylethane, 1,2-Dicyclohexylethane, 1-Phenyl-2-cyclohexylethane, gegebenenfalls halogenierten Stilbene, Benzylphenylether, Tolane und substituierten Zimtsäuren.

Die wichtigsten als Bestandteile derartiger flüssigkristalliner Phasen in Frage kommenden Verbindungen lassen sich durch die Formel II charakterisieren,

$$R'—L—G—E—R'' \qquad II$$

worin L und E je ein carbo- oder heterocyclisches Ring-system aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituiertem Naphthalin, Di- und Tetrahydronaphthalin, Chinazolin und Tetrahydrochinazolin gebildeten Gruppe,

| | | |
|---|---|---|
| G | —CH=CH— | —N(O)=N— |
| | —CH=CY— | —CH=N(O)— |
| | —C≡C— | $—CH_2—CH_2—$ |
| | —CO—O— | $—CH_2—O—$ |
| | —CO—S— | $—CH_2—S—$ |
| | —CH=N— | —COO-Phe-COO— |

oder eine C—C-Einfachbindung,

Y Halogen, vorzugsweise Chlor, oder —CN, und R' und R'' Alkyl, Alkoxy, Alkanoyloxy oder Alkoxycarbonyloxy mit bis zu 18, vorzugsweise bis zu 8 Kohlenstoffatomen, oder einer dieser Reste auch CN, NC, $NO_2$, $CF_3$, F, Cl oder Br bedeuten.

Bei den meisten dieser Verbindungen sind R' und R'' voneinander verschieden, wobei einer dieser Reste meist eine Alkyl- oder Alkoxygruppe ist. Aber auch andere Varianten der vorgesehenen Substituenten sind gebräuchlich. Viele solcher Substanzen oder auch Gemisch davon sind im Handel erhältlich. Alle diese Substanzen sind nach literaturbekannten Methoden erhältlich.

Die Herstellung der erfindungsgemäßen Phasen erfolgt in an sich üblicher Weise. In der Regel werden die Komponenten ineinander gelöst, zweckmäßig bei erhöhter Temperatur.

Durch geeignete Zusätze können die flüssigkristallinen Phasen nach der Erfindung so modifiziert werden, daß sie in allen bisher bekannt gewordenen Arten von Flüssigkristallanzeigeelementen verwendet werden können.

Derartige Zusätze sind dem Fachmann bekannt und in der Literatur ausführlich beschrieben. Beispielsweise können Leitsalze, vorzugsweise Ethyl-dimethyl-dodecyl-ammonium-4-hexyloxybenzoat, Tetrabutylammonium-tetraphenylboranat oder Komplexsalze von Kronenethern (vgl. z. B. I. Haller et al., Mol. Cryst. Liq. Cryst. Band 24, Seiten 249—258 (1973)) zur Verbesserung der Leitfähigkeit, dichroitische Farbstoffe zur Herstellung farbiger Guest-Host-Systeme oder Substanzen zur Veränderung der dielektrischen Anisotrope, der Viskosität und/oder der Orientierung der nematischen Phasen zugesetzt werden. Derartige Substanzen sind z.B. in den DE—OS-22 09 127, 22 40 864, 23 21 632, 23 38 281, 24 50 088, 26 37 430, 28 53 728 und 29 02 177 beschrieben.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

Beispiel 1

Eine flüssigkristalline Phase aus

7% 2-p-Cyanphenyl-5-n-pentylpyrimidin,
8% 2-p-Cyanphenyl-5-n-heptylpyrimidin,
8% 4-Cyan-4'-(trans-4-pentylcyclohexyl)-biphenyl,
4% 4-Ethyl-4'-(trans-4-propylcyclohexyl)-biphenyl,
6% 4-Ethyl-4'-(trans-4-pentylcyclohexyl)-biphenyl,
7% 2-p-Methoxyphenyl-5-hexylpyrimidin,
6% 2-p-Nonoxyphenyl-5-heptylpyrimidin,
6% 2-p-Nonoxyphenyl-5-octylpyrimdin,
7% 2-p-Methoxyphenyl-5-nonylpyrimidin,
6% 2-p-Nonoxyphenyl-5-nonylpyrimidin,
7% trans-4-Propylcyclohexancarbonsäure-(p-methoxyphenylester),
7% trans-4-Propylcyclohexancarbonsäure-(p-ethoxyphenylester),
7% trans-4-Butylcyclohexancarbonsäure-(p-methoxyphenylester),
7% trans-4-Pentylcyclohexancarbonsäure-(p-methoxyphehylester) und
7% trans-4-Propylcyclohexancarbonsäure-(p-propylester)

hat einen Klärpunkt von 68,1°, eine Viskosität von $40,6 \cdot 10^{-3}$ ($2986 \cdot 10^{-3}$) Pa · s bei 20° (−30°) und ein $K_3/K_1$ von 0,80 bei 20°. Diese Mischung weist bei −15° eine stabile Mesophase auf.

Beispiel 2

Ein flüssigkristalline Phase aus

3% 2-p-Cyanphenyl-5-pentyl-1,3-dioxan,
6% 4-Cyan-4'-(trans-4-pentylcyclohexyl)-biphenyl,
7% 4-Ethyl-4'-(trans-4-propylcyclohexyl)-biphenyl,
8% 4-Ethyl-4'-(trans-4-pentylcyclohexyl)-biphenyl,
5% 2-p-Pentoxyphenyl-5-hexylpyrimidin,

5% 2-p-Hexoxyphenyl-5-hexylpyrimidin,
5% 2-p-Heptoxyphenyl-5-hexylpyrimidin,
4% 2-p-Nonoxyphenyl-5-hexylpyrimidin,
5% 2-p-Heptoxyphenyl-5-heptylpyrimidin,
4% 2-p-Nonoxyphenyl-5-heptylpyrimidin,
5% 2-p-Nonoxyphenyl-5-nonylpyrimidin,
5% trans-4-Propylcyclohexancarbonsäure-(p-methoxyphenylester),
7% trans-4-Butylcyclohexancarbonsäure-(p-methoxyphenylester),
8% trans-4-Pentylcyclohexancarbonsäure-(p-methoxyphenylester),
17% trans-1-p-Propylphenyl-4-pentylcyclohexan und
6% Buttersäure-(p-trans-4-propylcyclohexylphenylester)

hat einen Klärpunkt von 62,5°, eine Viskosität von 33,7 · $10^{-3}$ (1580 · $10^{-3}$) Pa · s bei 20° (−30°) und ein $K_3/K_1$ von 0,71 bsi 20°. Diese Mischung weist bei −15° eine stabile Mesophase auf.

Beispiel 3

Eine flüssigkristalline Phase aus
5% 2-p-Cyanphenyl-5-ethyl-1,4,-dioxan,
8% 2-p-Cyanphenyl-5-propyl-1,4-dioxan,
8% 2-p-Cyanphenyl-5-butyl-1,4-dioxan,
7% 2-p-Cyanphenyl-5-pentyl-1,4-dioxan,
5% 4,4'-Bis-(trans-4-propylcyclohexyl)-biphenyl,
7% 4-(trans-4-Pentylcyclohexyl)-4'-(trans-4-propylcyclohexyl)-biphenyl,
6% 2-p-Pentoxyphenyl-6-hexylpyrimidin,
6% 2-p-Hexoxyphenyl-6-hexylpyrimidin,
6% 2-p-Heptoxyphenyl-6-hexylpyrimidin,
5% 2-p-Nonoxyphenyl-6-hexylpyrimidin,
5% 2-p-Heptoxyphenyl-5-heptylpyrimidin,
5% 2-p-Nonoxyphenyl-5-heptylpyrimidin,
4% trans-4-Propylcyclohexancarbonsäure-(p-methoxyphenylester),
6% trans-4-Butylcyclohexancarbonsäure-(p-methoxyphenylester),
7% trans-4-Pentylcyclohexancarbonsäure-(p-methoxyphenylester) und
10% trans-1-p-Propylphenyl-4-pentylcyclohexan

hat einen Klärpunkt von 62,8°, eine Viskosität von 3900 · $10^{-3}$ Pa · s bei −30° und ein $K_3/K_1$ von 0,79 bei 20°. Diese Mischung weist bis −30° eine stabile Mesophase auf.

Beispiel 4

Eine flüssigkristalline Phase aus
5% 2-p-Cyanphenyl-5-ethyl-1,3-dioxan,
8% 2-p-Cyanphenyl-5-propyl-1,3-dioxan,
8% 2-p-Cyanphenyl-5-butyl-1,3-dioxan,
7% 2-p-Cyanphenyl-5-pentyl-1,3-dioxan,
5% 4,4'-Bis-(trans-4-propylcyclohexyl)-biphenyl,
7% 4-(trans-4-Pentylcyclohexyl)-4'-(trans-4-propylcyclohexyl)-biphenyl,
4% 2-p-Methoxyphenyl-5-hexylpyrimidin,
4% 2-p-Pentoxyphenyl-5-hexylpyrimidin,
4% 2-p-Heptoxyphenyl-5-hexylpyrimidin,
4% 2-p-Octoxyphenyl-5-hexylpyrimidin,
3% 2-p-Nonoxyphenyl-5-hexylpyrimidin,
4% 2-p-Hexoxyphenyl-5-heptylpyrimidin,
4% 2-p-Nonoxyphenyl-5-heptylpyrimidin,
3% 2-p-Heptoxyphenyl-5-ocytlpyrimidin,
4% 2-p-Methoxyphenyl-5-nonylpyrimidin,
3% 2-p-Hexoxyphenyl-5-nonylpyrimidin,
4% trans-4-Propylcyclohexancarbonsäure-(p-methoxyphenylester),
4% trans-4-Butylcyclohexancarbonsäure-(p-methoxyphenylester),
5% trans-4-Pentylcyclohexancarbonsäure-(p-methoxyphenylester) und
10% trans-1-p-Propylphenyl-4-pentylcyclohexan

hat einen Klärpunkt von 62,2° und ein $K_2/K_1$ von 0,76 bis 20°. Diese Mischung weist bis −30° eine stabile Mesophase auf.

Beispiel 5

Eine flüssigkristalline Phase aus
5% 2-p-Cyanphenyl-5-ethyl-1,3-dioxan,
8% 2-p-Cyanphenyl-5-propyl-1,3-dioxan,
8% 2-p-Cyanphenyl-5-butyl-1,3-dioxan,

7% 2-p-Cyanphenyl-5-pentyl-1,3-dioxan,
5% 4,4'-Bis-(trans-4-propylcyclohexyl)-biphenyl,
7% 4-(trans-4-Pentylcyclohexyl)-4'-(trans-4-propylcyclohexyl)-biphenyl,
4% 2-p-Methoxyphenyl-5-hexylpyrimidin,
5% 2-p-Pentoxyphenyl-5-hexylpyrimidin,
5% 2-p-Heptoxyphenyl-5-hexylpyrimidin,
5% 2-p-Octoxyphenyl-5-hexylpyrimidin,
3% 2-p-Nonoxyphenyl-5-hexylpyrimidin,
4% 2-p-Hexoxyphenyl-5-heptylpyrimidin,
4% 2-p-Nonoxyphenyl-5-heptylpyrimidin,
3% 2-p-Heptoxyphenyl-5-octylpyrimidin,
4% 2-p-Methoxyphenyl-5-nonylpyrimidin,
3% 2-p-Hexoxyphenyl-5-nonylpyrimidin,
4% trans-4-Propylcyclohexancarbonsäure-(p-methoxyphenylester),
4% trans-4-Butylcyclohexancarbonsäure-(p-methoxyphenylester),
5% trans-4-Pentylcyclohexancarbonsäure-(p-methoxyphenylester) und
7% trans-1-p-Propylphenyl-4-pentylcyclohexan

hat einen Klärpunkt von 63,5° und ein $K_3/K_1$ von 0,75 bei 20°. Diese Mischung weist bis −30° eine stabile Mesophase auf.

Beispiel 6

Eine flüssigkristalline Phase aus

5% 2-p-Cyanphenyl-5-ethyl-1,3-dioxan,
8% 2-p-Cyanphenyl-5-propyl-1,3-dioxan,
8% 2-p-Cyanphenyl-5-butyl-1,3-dioxan,
7% 2-p-Cyanphenyl-5-pentyl-1,3-dioxan,
5% 4,4'-Bis-(trans-4-Propylcyclohexyl)-biphenyl
7% 4-(trans-4-Pentylcyclohexyl)-4'-(trans-4-propylcyclohexyl)-biphenyl,
4% 2-p-Methoxyphenyl-5-hexylpyrimidin,
4% 2-p-Pentoxyphenyl-5-hexylpyrimidin,
4% 2-p-Heptoxyphenyl-5-hexylpyrimidin,
4% 2-p-Octoxyphenyl-5-hexylpyrimidin,
3% 2-p-Nonoxyphenyl-5-hexylpyrimidin,
4% 2-p-Hexoxyphenyl-5-heptylpyrimidin,
4% 2-p-Nonoxyphenyl-5-heptylpyrimidin,
3% 2-p-Heptoxyphenyl-5-octylpyrimidin,
4% 2-p-Methoxyphenyl-5-nonylpyrimidin,
3% 2-p-Hexoxyphenyl-5-nonylpyrimidin,
4% 2-p-Octoxyphenyl-5-pentylpyrimidin,
4% 2-p-Nonoxyphenyl-5-pentylpyrimidin,
5% trans-4-Propylcyclohexancarbonsäure-(p-methoxyphenylester) und
10% trans-1-p-Propylphenyl-4-pentylcyclohexan

hat einen Klärpunkt von 61,3° und ein $K_3/K_1$ von 0,71 bei 20°. Diese Mischung weist bis −30° eine stabile Mesophase auf.

Beispiel 7

Eine flüssigkristalline Phase aus

9% 2-p-Cyanphenyl-5-propyl-1,3-dioxan,
9% 2-p-Cyanphenyl-5-butyl-1,3-dioxan,
7% 2-p-Cyanphenyl-5-pentyl-1,3-dioxan,
10% trans-1-p-Methoxyphenyl-4-propylcyclohexan,
5% 2-p-Pentoxyphenyl-5-hexylpyrimidin,
5% 2-p-Hexoxyphenyl-5-hexylpyrimidin,
5% 2-p-Heptoxyphenyl-5-hexylpyrimidin,
5% 2-p-Nonoxyphenyl-5-hexylpyrimidin,
4% 2-p-Heptoxyphenyl-5-heptyl-pyrimidin,
4% 2-p-Nonoxyphenyl-5-heptylpyrimidin,
14% trans,trans-4-Butyryloxy-4'-propylcyclohexylcyclohexan,
14% trans,trans-4-Hexanoyloxy-4'-propylcyclohexylcyclohexan,
5% 4-(trans-4-Pentylcyclohexyl)-4'-(trans-4-propylcyclohexyl)-biphenyl und
4% 4-(trans-4-Pentylcyclohexyl)-4'-(trans-4-propylcyclohexyl)-2'-fluor-biphenyl

hat einen Klärpunkt von 62°, eine Viskosität von 1480 1 $10^{-3}$ Pa.s bei −20° und ein $K_3/K_1$ von 0,76 bsi 20°. Diese Mischung weist bei −15° eine stabile Mesophase auf.

Beispiel 8

Eine flüssigkristalline Phase aus

3% 2-p-Cyanphenyl-5-pentyl-1,3-dioxan,
6% 4-Cyan-4'-(trans-4-pentylcyclohexyl)-biphenyl,
7% 2-[4-(2-trans-4-Propylcyclohexylethyl)-phenyl]-5-pentylpyrimidin,
8% 2-[4-(2-trans-4-Propylcyclohexylethyl)-phenyl]-5-heptylpyrimidin,
5% 2-p-Octoxyphenyl-5-pentylpyrimidin,
5% 2-p-Pentoxyphenyl-5-hexylpyrimidin,
5% 2-p-Heptoxyphenyl-5-hexylpyrimidin,
4% 2-p-Nonoxyphenyl-5-hexylpyrimidin,
5% 2-p-Heptoxyphenyl-5-heptylpyrimidin,
4% 2-p-Nonoxyphenyl-5-heptylpyrimidin,
5% 2-p-Nonoxyphenyl-5-nonylpyrimidin,
5% trans-4-Propylcyclohexancarbonsäure-(p-methoxyphenylester),
7% trans-4-Butylcyclohexancarbonsäure-(p-methoxyphenylester),
8% trans-4-Pentylcyclohexancarbonsäure-(p-methoxyphenylester),
17% trans-1-p-Propylphenyl-4-pentylcyclohexan und
6% Buttersäure-(p-(trans-4-propylcyclohexylphenylester)

hat einen Klärpunkt von 65°. Diese Mischung weist bei −20° eine stabile Mesophase auf.

Beispiel 9

Eine flüssigkristalline Phase aus

7% 2-p-Cyanphenyl-5-pentylpyrimidin,
8% 2-p-Cyanphenyl-5-heptylpyrimidin,
8% 2-p-Cyanphenyl-5-(trans-4-heptylcyclohexyl)-pyrimidin,
5% 4-Ethyl-4'-(trans-4-propylcyclohexyl)-biphenyl,
5% 4-Ethyl-4'-(trans-4-pentylcyclohexyl)-biphenyl,
4% 2-p-Methoxyphenyl-5-hexylpyrimidin,
4% 2-p-Pentoxyphenyl-5-hexylpyrimidin,
4% 2-p-Methoxyphenyl-5-heptylpyrimidin,
3% 2-p-Nonoxyphenyl-5-heptylpyrimidin,
3% 2-p-Heptoxyphenyl-5-octylpyrimidin,
3% 2-p-Nonoxyphenyl-5-octylpyrimidin,
4% 2-p-Methoxyphenyl-5-nonylpyrimidin,
4% 2-p-Hexoxyphenyl-5-nonylpyrimidin,
3% 2-p-Nonoxyphenyl-5-nonylpyrimidin,
5% trans-4-Propylcyclohexancarbonsäure-(p-methoxyphenylester),
5% trans-4-Propylcyclohexancarbonsäure-(p-ethoxyphenylester),
5% trans-4-Butylcyclohexancarbonsäure-(p-methoxyphenylester),
5% trans-4-Butylcyclohexancarbonsäure-(p-ethoxyphenylester),
5% trans-4-Pentylcyclohexancarbonsäure-(p-methoxyphenylester) und
10% trans-1-p-Propylphenyl-4-pentylcyclohexan

hat einen Klärpunkt von 64° und ein $K_3/K_1$ von 0,71 bei 20°. Diese Mischung weist bei −20° eine stabile Mesophase auf.

Beispiel 10

Eine flüssigkristalline Phase aus

4% 5-Cyan-2-[4-(trans-4-pentylcyclohexylcarbonyloxy)-phenyl]-pyrimidin,
6% 2-p-Cyanphenyl-5-heptylpyrimidin,
5% 2-p-Cyanphenyl-5-pentylpyrimidin,
8% 2-p-Cyanphenyl-5-(p-butylphenyl)-pyrimidin,
7% 2-p-Methoxyphenyl-5-hexylpyrimidin,
6% 2-p-Nonoxyphenyl-5-heptylpyrimidin,
6% 2-p-Nonoxyphenyl-5-octylpyrimidin,
7% 2-p-Methoxyphenyl-5-nonylpyrimidin,
6% 2-p-Nonoxyphenyl-5-nonylpyrimidin,
5% trans-4-Propylcyclohexancarbonsäure-(p-methoxyphenylester),
5% trans-4-Propylcyclohexancarbonsäure-(p-ethoxyphenylester),
5% trans-4-Butylcyclohexancarbonsäure-(p-methoxyphenylester),
5% trans-4-Butylcyclohexancarbonsäure-(p-ethoxyphenylester),
5% trans-4-Pentylcyclohexancarbonsäure-(p-methoxyphenylester),
10% trans-1-p-Propylphenyl-4-pentylcyclohexan,
5% 4-Ethyl-4'-(trans-4-propylcyclohexyl)-biphenyl und
5% 4-Ethyl-4'-(trans-4-pentylcyclohexyl)-biphenyl

hat einen Klärpunkt von 67° und ein $K_3/K_1$ von 0,72 bei 20°. Diese Mischung weist bei −20° eine stabile Mesophase auf.

Beispiel 11

Eine flüssigkristalline Phase aus

8% 2-p-Cyanphenyl-5-butyl-1,3-dioxan,
7% 2-p-Cyanphenyl-5-pentyl-1,3-dioxan,
8% 4-Cyan-4'-(trans-4-pentylcyclohexyl)-biphenyl,
4% 5-Butyl-2-[4-(trans-4-butylcyclohexyl)-carbonyloxy)-phenyl]-pyrimidin,
5% 5-Pentyl-2-[4-(trans-4-pentylcyclohexyl-carbonyloxy)-phenyl]-pyrimidin,
5% 2-p-Pentoxyphenyl-5-hexylpyrimidin,
5% 2-p-Heptoxyphenyl-5-hexylpyrimidin,
4% 2-p-Nonoxyphenyl-5-hexylpyrimidin,
4% 2-p-Hexoxyphenyl-5-heptylpyrimidin,
4% 2-p-Octoxyphenyl-5-heptylpyrimidin,
3% 2-p-Nonoxyphenyl-5-heptylpyrimidin,
4% 2-p-Hexoxyphenyl-5-nonylpyrimidin,
3% 2-p-Nonoxyphenyl-5-nonylpyrimidin,
5% trans-4-Propylcyclohexancarbonsäure-(p-methoxyphenylester),
5% trans-4-Propylcyclohexancarbonsäure-(p-ethoxyphenylester),
5% trans-4-Butylcyclohexancarbonsäure-(p-methoxyphenylester),
5% trans-4-Butylcyclohexancarbonsäure-(p-ethoxyphenylester),
5% trans-4-Pentylcyclohexancarbonsäure-(p-methoxyphenylester) und
11% trans-1-p-Propylphenyl-4-pentylcyclohexan

hat einen Klärpunkt von 69° und ein $K_3/K_1$ von 0,78 bei 20°. Diese Mischung weist bei −15° eine stabile Mesophase auf.

Beispiel 12

Eine flüssigkristalline Phase aus

5% 2-(trans-4-Propylcyclohexyl)-5-cyanpyrimidin,
5% 2-(trs-4-Pentylcyclohexyl)-5-cyanpyrimidin,
4% 2-(trans-4-Cyancyclohexyl)-5-(trans-4-heptylcyclohexyl)-pyrimidin,
6% 2-p-Octoxyphenyl-5-pentylpyrimidin,
6% 2-p-Methoxyphenyl-5-hexylpyrimidin,
6% 2-p-Pentoxyphenyl-5-hexylpyrimidin,
6% 2-p-Heptoxyphenyl-5-hexylpyrimidin,
6% 2-p-Nonoxyphenyl-5-hexylpyrimidin,
6% 2-p-Methoxyphenyl-5-heptylpyrimidin,
6% 2-p-Hexoxyphenyl-5-heptylpyrimidin,
6% 2-p-Nonoxyphenyl-5-heptylpyrimidin,
6% 2-p-Methoxyphenyl-5-nonylpyrimidin,
6% 2-p-Hexoxyphenyl-5-nonylpyrimidin,
10% 2-(trans-4-Pentylcyclohexyl)-5-pentylpyrimidin,
10% 2-(trans-4-Propylcyclohexyl)-5-propylpyrimidin und
6% trans-4-Propylcyclohexancarbonsäure-(p-methoxyphenylester)

hat einen Klärpunkt von 56° und ein $K_3/K_1$ von 0,74 bei 20°. Diese Mischung weist bei −15° eine stabile Mesophase auf.

Beispiel 13

Eine flüssigkristalline Phase aus

5%-2-p-Cyanphenyl-5-ethyl-1,3-dioxan,
8% 2-p-Cyanphenyl-5-propyl-1,3-dioxan,
8% 2-p-Cyanphenyl-5-butyl-1,3-dioxan,
7% 2-p-Cyanphenyl-5-pentyl-1,3-dioxan,
6% 2-p-Nonoxyphenyl-5-hexylpyrimidin,
9% 2-(trans-4-Heptylcyclohexyl)-5-pentylpyrimidin,
5% 2-(trans-4-Butylcyclohexyl)-5-propylpyrimidin,
8% trans-4-Propylcyclohexancarbonsäure-(p-methoxyphenylester),
12% trans-4-Butylcyclohexancarbonsäure-(p-methoxyphenylester),
15% trans-4-Pentylcyclohexancarbonsäure-(p-methoxyphenylester),
7% 4,4'-Bis-(trans-4-propylcyclohexyl)-biphenyl und
10% trans-1-p-Ethoxyphenyl-4-propylcyclohexan

kristallisiert bei −15° nicht aus.

Beispiel 14

Eine flüssigkristalline Phase aus

5,0% 2-p-Cyanphenyl-5-ethyl-1,3-dioxan,
8,0% 2-p-Cyanphenyl-5-propyl-1,3-dioxan,
8,0% 2-p-Cyanphenyl-5-butyl-1,3-dioxan,
7,0% 2-p-Cyanphenyl-5-pentyl-1,3-dioxan,
5,9% 2-p-Pentoxyphenyl-5-hexylpyrimidin,
10,9% 2-p-Hexoxyphenyl-5-hexylpyrimidin,
4,0% 2-p-Heptoxyphenyl-5-hexylpyrimidin,
3,0% 2-p-Nonoxyphenyl-5-hexylpyrimidin,
3,3% 2-p-Heptoxyphenyl-5-heptylpyrimidin,
2,6% 2-p-Nonoxyphenyl-5-heptylpyrimidin,
3,3% 2-p-Heptoxyphenyl-5-octylpyrimidin,
5,0% 4,4'-Bis-(trans-4-propylcyclohexyl)-biphenyl,
7,0% 4-(trans-4-Pentylcyclohexyl)-4'-(trans-4-propylcyclohexyl)-biphenyl,
4,0% trans-4-Propylcyclohexancarbonsäure-(p-methoxyphehylester),
6,0% trans-4-Butylcyclohexancarbonsäure-(p-methoxyphenylester),
7,0% trans-4-Pentylcyclohexancarbonsäure-(p-methoxyphenylester), und
10,0% trans-1-p-Propylphenyl-4-pentylcyclohexan

hat einen Klärpunkt von 63,8° und eine dielektrische Anisotrope $\Delta\varepsilon$ von +8,9. Diese Mischung weist bei −15° eine stabile Mesophase auf.

Beispiel 15

Eine flüssigkristalline phase aus

7% 2-p-Cyanphenyl-5-ethylpyrimidin,
5% 4-Ethyl-4'-(trans-4-propylcyclohexyl)-biphenyl,
6% 4-Ethyl-4'-(trans-4-pentylcyclohexyl)-biphenyl,
4% 2-p-Methoxyphenyl-5-hexylpyrimidin,
3% 2-p-Pentoxyphenyl-5-hexylpyrimidin,
4% 2-p-Methoxyphenyl-5-heptylpyrimidin,
2% 2-p-Pentoxyphenyl-5-heptylpyrimidin,
2% 2-p-Nonoxyphenyl-5-heptylpyrimidin,
3% 2-p-Decylphenyl-5-cyanpyrimidin,
4% 2-p-Undecylphenyl-5-cyanpyrimidin,
2% 2-p-Dodecylphenyl-5-cyanpyrimidin,
1% 2-p-Tridecylphenyl-5-cyanpyrimidin,
10% trans-1-p-Propylphenyl-4-pentylcyclohexan,
12% trans-4-Propylcyclohexancarbonsäure-(p-methoxyphenylester),
14%- trans-4-Butylcyclohexancarbonsäure-(p-methoxyphenylester),
17% trans-4-Pentylcyclohexancarbonsäure-(p-methoxyphenylester) und
4% trans-4-Pentylcyclohexancarbonsäure-(p-ethoxyphenylester)

kristallisiert bei −15° nicht aus.

Beispiel 16

Eine flüssigkristalline Phase aus

5% 2-p-Cyanphenyl-5-pentyl-1,3-dioxan,
6% 4-Cyan-4'-(trans-4-pentylcyclohexyl)-biphenyl,
7% 4-Ethyl-4'-(trans-4-propylcyclohexyl)-biphenyl,
8% 4-Ethyl-4'-(trans-4-pentylcyclohexyl)-biphenyl,
5% 2-p-Pentoxyphenyl-5-hexylpyrimidin,
5% 2-p-Hexoxyphenyl-5-hexylpyrimidin,
5% 2-p-Heptoxyphenyl-5-hexylpyrimidin,
4% 2-p-Nonoxyphenyl-5-hexylpyrimidin,
5% 2-p-Heptoxyphenyl-5-heptylpyrimidin,
4% 2-p-Nonoxyphenyl-5-heptylpyrimidin,
5% 2-p-Nonoxyphenyl-5-nonylpyrimidin,
4% trans-4-Propylcyclohexancarbonsäure-(p-methoxyphenylester),
7% trans-4-Butylcyclohexancarbonsäure-(p-methoxyphenylester),
7% trans-4-Pentylcyclohexancarbonsäure-(p-methoxyphenylester),
17% trans-1-p-Propylphenyl-4-pentylcyclohexan und
6% Buttersäure-(p-trans-4-propylcyclohexylphenylester)

hat einen Klärpunkt von 63°. Diese Mischung weist bei −30° eine stabile Mesophase auf.

Beispiel 17

Eine flüssigkristalline Phase aus

5% 2-p-Cyanphenyl-5-ethyl-1,3-dioxan,
7% 2-p-Cyanphenyl-5-propyl-1,3-dioxan,
8% 2-p-Cyanphenyl-5-butyl-1,3-dioxan,
7% 2-p-Cyanphenyl-5-pentyl-1,3-dioxan,
6% 4-(trans-4-Pentylcyclohexyl)-4'-(trans-4-propylcyclohexyl)-biphenyl,
4% 4,4'-Bis-(trans-4-pentylcyclohexyl)-biphenyl,
5% 4,4'-Bis-(trans-4-pentylcyclohexyl)-2-fluorbiphenyl,
6% 2-p-Pentoxyphenyl-5-hexylpyrimidin,
6% 2-p-Hexoxyphenyl-5-hexylpyrimidin,
6% 2-p-Heptoxyphenyl-5-hexylpyrimidin,
5% 2-p-Nonoxyphenyl-5-hexylpyrimidin,
5% 2-p-Heptoxyphenyl-5-heptylpyrimidin,
5% 2-p-Nonoxyphenyl-5-heptylpyrimidin,
4% trans-4-Propylcyclohexancarbonsäure-(p-methoxyphenylester),
5% trans-4-Butylcyclohexancarbonsäure-(p-methoxyphenylester),
5% trans-4-Pentylcyclohexancarbonsäure-(p-methoxyphenylester und
11% trans-1-p-Propylphenyl-4-pentylcyclohexan

weist bei −25° eine stabile Mesophase auf.

Beispiel 18

Eine flüssigkristalline Phase aus

5% 2-p-Cyanphenyl-5-ethyl-1,3-dioxan,
7% 2-p-Cyanphenyl-5-propyl-1,3-dioxan,
8% 2-p-Cyanphenyl-5-butyl-1,3-dioxan,
7% 2-p-Cyanphenyl-5-pentyl-1,3-dioxan,
6% 4-(trans-4-Pentylcyclohexyl)-4'-(trans-4-propylcyclohexyl)-biphenyl,
4% 4,4'-Bis-(trans-4-pentylcyclohexyl)-biphenyl,
5% 4,4'-Bis-(trans-4-pentylcyclohexyl)-2-fluorbiphenyl,
5% 2-p-Pentoxyphenyl-5-hexylpyrimidin,
5% 2-p-Hexoxyphenyl-5-hexylpyrimidin,
5% 2-p-Heptoxyphenyl-5-hexylpyrimidin,
5% 2-p-Nonoxyphenyl-5-hexylpyrimidin,
5% 2-p-Heptoxyphenyl-5-heptylpyrimidin,
5% 2-p-Nonoxyphenyl-5-heptylpyrimidin,
4% trans-4-Propylcyclohexancarbonsäure-(p-methoxyphenylester),
5% trans-4-Butylcyclohexancarbonsäure-(p-methoxyphenylester),
5% trans-4-Pentylcyclohexancarbonsäure-(p-methoxyphenylester und
14% trans-1-p-Propylphenyl-4-pentylcyclohexan

weist bei −25° eine stabile Mesophase auf.

**Patentansprüche**

1. Flüssigkristalline Phase bestehend aus 3 bis 25 Komponenten, dadurch gekennzeichnet, daß sie 3 bis 15 Pyrimidinverbindungen der Formel I

$$R^1—A^1—Z^1—A^2—R^2 \qquad I$$

enthält, worin

$R^1$ und $R^2$ jeweils unabhangig voneinandergeradkettiges Alkyl oder Alkoxy mit bis zu 12 C-Atomen,

$A^1$ —A—, —$A^4$—A— oder —A—$Z^3$—$A^4$—,

A Pyrimidin-2,5-diyl

$A^2$ und $A^4$ jeweils unsubstituiertes oder durch ein oder zwei F- und/oder Cl-Atome und/oder $CH_3$-Gruppen und/oder CN-Gruppen substituiertes 1,4-Phenylen, worin auch eine oder zwei CH-Gruppen durch N-Atome ersetzt sein können, 1,4-Cyclohexylen, worin auch eine oder zwei nicht benachbarte $CH_2$-Gruppen durch O-Atome ersetzt sein können, 1,3-Dithian-2,5-diyl, 1,4-Bicyclo(2,2,2)-octylen, Dekahydronaphthalin-2,6-diyl oder 1,2,3,4-Tetrahydronaphthalin-2,6-diyl, und

$Z^1$ und $Z^3$ jeweils —CO—O—, —O—CO—, —$CH_2CH_2$—, —$OCH_2$—, —$CH_2$— oder eine Einfachbindung bedeutet,

mit einem Gesamtanteil von 20 bis 94%, wobei zwei Pyrimidinverbindungen der Formel I vier verschiedene Flügelgruppen $R^1$ und $R^2$ besitzen, und andere Bestandteile der Formel II enthält,

$$R'—L—G—E—R'' \qquad II$$

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystem, 2,5-disubstituierten 1,3-Dioxanringen, 2,6-disubstituiertem Naphthalin, Di- und Tetrahydronaphthalin, Chinazolin und Tetrahydrochinazolin gebildeten Gruppe,

| | | |
|---|---|---|
| G | —CH=CH— | —N(O)=N— |
| | —C≡C— | —CH=N(O)— |
| | —CH=N— | $—CH_2—CH_2—$ |
| | | $—CH_2—O—$ |
| | | $—CH_2—S—$ |

oder eine C—C-Einfachbindung, und R' und R'' Alkyl, Alkoxy, Alkanoyloxy oder Alkoxycarbonyloxy mit bis zu 8 Kohlenstoffatomen, oder einer dieser Reste auch CN, NC, $NO_2$, $CF_3$, F, Cl oder Br bedeuten.

2. Phase nach Anspruch 1, dadurch gekennzeichnet, daß $A^1$ Pyrimidin-2,5-diyl, $Z^1$ eine Einfachbindung und $A^2$ 1,4-Phenylen bedeutet.

3. Phase nach Anspruch 2, dadurch gekennzeichnet, daß sie 6 bis 12 Pyrimidinverbindungen der Formel I enthält.

4. Verwendung der Phase nach Anspruch 1 in Flüssigkristallanzeigeelementen mit hohen Multiplexverhältnissen zur Verbesserung der Stabilität bei tiefen Temperaturen.

5. Flüssigkristallanzeigeelement, dadurch gekennzeichnet, daß es eine Phase nach Anspruch 1 enthält.

6. Elektrooptisches Anzeigeelement nach Anspruch 5, dadurch gekennzeichnet, daß es als Dielektrikum eine Phase nach Anspruch 1 enthält.

## Revendications

1. Phase à cristaux liquides consistant en 3 à 25 composants et caractérisée en ce qu'elle contient de 3 à 15 dérivés de la pyrimidine répondant à la formule I

$$R^1—A^1—Z^1—A—^2—R^2 \qquad I$$

dans laquelle

$R^1$ et $R^2$ représentent chacun, indépendamment l'un de l'autre, un groupe alkyle ou alcoxy à chaîne droite contenant jusqu'à 12 atomes de carbone,

$A^1$ représente —A—, $—A^4—A—$ ou $—A—Z^3—A^4—$,

A représente un groupe pyrimidine-2,5-diyle,

$A^2$ et $A^4$ représentent chacun un groupe 1,4-phénylène non substitué ou substitué par un ou deux atomes de F et/ou de Cl et/ou groupes $CH_3$ et/ou groupes CN et dans lequel un ou deux groupes CH peuvent être remplacés par des atomes d'azote, un groupe 1,4-cyclohexylène dans lequel un ou deux groupes $CH_2$ non voisins peuvent être remplacés par des atomes d'oxygène, un groupe 1,3-dithianne-2,5-diyle, 1,4-bicyclo(2,2,2) octylène, décahydronaphthalène-2,5-diyle ou 1,2,3,4-tétrahydronaphtalène-2,6-diyle, et

$Z^1$ et $Z^3$ représentent chacun —CO—O—, —O—CO—, $—CH_2CH_2—$, $—OCH_2—$, $—CH_2O—$ ou une liaison simple,

à une proportion totale de 20 à 94%, deux dérivés de la pyrimidine de formule I contenant quatre groupes d'extrémité $R^1$ et $R^2$ différents, et elle contient d'autres constituants de formule II

$$R'—L—G—E—R'' \qquad II$$

dans laquelle L et E représentent chacun un système carbocyclique ou hétérocyclique pris dans le groupe formé par les cycles benzène et cyclohexane 1,4-disubstitués, les systèmes biphényle, phénylcyclohexane et cyclohexylcyclohexane 4,4'-disubstitués, les cycles 1,3-dioxanne 2,4-disubstitués, le naphthalène 2,6-disubstitué, le di- et le tétra-hydronaphtalène, la quinazoline et la tétrahydroquinazoline,

| | | |
|---|---|---|
| G représente | —CH=CH— | —N(O)=N— |
| | —C≡C— | —CH=N(O)— |
| | —CH=N— | $—CH_2—CH_2—$ |
| | | $—CH_2—O—$ |
| | | $—CH_2—S—$ |

ou une liaison simple C—C, et R' et R'' représentent des groupes alkyle, alcoxy, alcanoyloxy ou alcoxycarbonyloxy contenant jusqu'à 8 atomes de carbone, l'un de ses symboles pouvant également représenter CN, NC, $NO_2$, $CF_3$, F, Cl ou Br.

2. Phase selon la revendication 1, caractérisée en ce que $A^1$ représente un groupe pyrimidine-2,5-diyle, $Z^1$ représente une liaison simple et $A^2$ un groupe 1,4-phénylène.

3. Phase selon la revendication 2, caractérisée en ce qu'elle contient de 6 à 12 dérivés de la pyrimidine de formule I.

4. Utilisation de la phase de la revendication 1 dans des éléments d'affichage à cristaux liquides à hauts rapports multiplex pour l'amélioration de la stabilité à basse température.

5. Elément d'affichage à cristaux liquides, caractérisé en ce qu'il contient une phase selon la revendication 1.

6. Elément d'affichage électro-optique selon la revendication 5, caractérisé en ce qu'il contient en tant que diélectrique une phase selon la revendication 1.

## Claims

1. Liquid crystal phase consisting of 3 to 25 components, characterised in that it contains 3 to 15 pyrimidine compounds of the formula I

$$R^1—A^1—Z^1—A^2—R^2 \qquad I$$

wherein

$R^1$ and $R^2$ in each case independently of one another are an alkyl or an alkoxy group with up to 12 C atoms,

$A^1$ is —A—, —$A^4$—A— or —A—$Z^3$—$A^4$—,

A is pyrimidine-2,5-diyl,

$A^2$ and $A^4$ are in each case 1,4-phenylene which is unsubstituted or substituted by one or two F and/or Cl atoms and/or $CH_3$ groups and/or CN groups, it also being possible for one or two CH groups to be replaced by N atoms, 1,4-cyclohexylene, it also being possible for one or two non-adjacent $CH_2$ groups to be replaced by 0 atoms, 1,3-dithiane-2,5-diyl, 1,4-bicyclo(2,2,2)-octylene, decahydronapthaline-2,6-diyl or 1,2,3,4-tetrahydronaphthalene-2,6-diyl, and

$Z^1$ and $Z^3$ are in each case —CO—O—, —O—CO—, —$CH_2CH_2$—, —$OCH_2$—, —$CH_2O$— or a single bond,

these pyrimidine compounds being contained with a total content of 20 to 94%, whereby two pyrimidine compounds of the formula I have four different end group substituents $R^1$ and $R^2$, and the liquid crystal phase further contains other constituents of the formula II

$$R'—L—G—E—R'' \qquad II$$

wherein L and E are each a carbocyclic or heterocyclic ring system from the group formed by 1,4-disubstituted benzene and cyclohexane rings, 4,4'-disubstituted biphenyl, phenylcyclohexane and cyclohexylcyclohexane systems, 2,5-disubstituted 1,3-dioxane rings, 2,6-disubstituted naphthalene, di- and tetra-hydronapthalene, quinazoline and tetrahydroquinazoline,

| G is | | |
|---|---|---|
| | —CH=CH— | —CH=N(O)— |
| | —C≡C— | —$CH_2$—$CH_2$— |
| | —CH=N— | —$CH_2$—O— |
| | —N(O)=N— | —$CH_2$—S— |

or a C—C single bond,

and R' and R'' are alkyl, alkoxy, alkanoyloxy or alkoxycarbonyloxy with up to 8 carbon atoms, or one of these radicals is also CN, NC, $NO_2$, $CF_3$, F, Cl or Br.

2. Phase according to Claim 1, characterised in that $A^1$ is pyrimidine-2,5-diyl, $Z^1$ is a single bond and $A^2$ is 1,4-phenylene.

3. Phase according to Claim 2, characterised in that it contains 6 to 12 pyrimidine compounds of the formula I.

4. Use of the phase according to Claim 1 in liquid crystal display elements with high multiplexing ratios for improving the stability at low temperatures.

5. Liquid crystal display element, characterised in that it contains a phase according to Claim 1.

6. Electrooptical display element according to Claim 5, characterised in that it contains a phase according to Claim 1 as the dielectric.